# EUROPÄISCHE PATENTANMELDUNG

(11) **EP 0 700 190 A1**
(43) Veröffentlichungstag der Anmeldung: **06.03.1996**
(21) Anmeldenummer: 95202320.8
(22) Anmeldetag: 28.08.1995
(51) Int. Cl.: H04L 27/06

(54) **Verfahren und Schaltungsanordnung zum Demodulieren eines digital amplitudenmodulierten Trägersignals**

(30) Priorität: 03.09.1994 DE 4431522
(71) Anmelder: Philips Patentverwaltung GmbH, D-22335 Hamburg (DE); PHILIPS ELECTRONICS N.V., NL-5621 BA Eindhoven (NL)
(72) Erfinder: Tobergte, Wolfgang, Dr., c/o Philips, D-22335 Hamburg (DE); Ritter, Siegfried, Dr., c/o Philips, D-22335 Hamburg (DE)
(74) Vertreter: Poddig, Dieter, Dipl.-Ing.

(57) **Zusammenfassung**

Die Demodulation von binär amplitudenmodulierten Trägersignalen wirft beispielsweise bei kontaktlosen Datenträgern besondere Probleme auf, weil dann das HF-Signal auch gleichzeitig zur Erzeugung der Betriebsspannung verwendet wird, die bei genügend großer Energie auf einen festen Wert begrenzt wird. Außerdem sind amplitudenmodulierte Signale sehr häufig von starken Störsignalen überlagert. Für eine zuverlässige Demodulation unter derartigen Umständen wird daher von dem Eingangssignal ein Regelsignal subtrahiert und die Werte einer Polarität der Differenz integriert. Zur Erzeugung des Regelsignals werden die Werte einer Polarität einer weiteren Differenz zwischen dem Eingangssignal und einem weiteren, zum vorgenannten proportionalen Regelsignal kontinuierlich zu einem Integralsignal integriert, und dieses Integralsignal wird periodisch um einen festen Bruchteil verringert. Von diesem Integralsignal werden die Regelsignale nichtlinear abgeleitet, vorzugsweise durch die Eingangskennlinie eines Transistors.

## Beschreibung

Die Erfindung betrifft allgemein das Demodulieren von digital amplitudenmodulierten Trägersignalen und insbesondere von solchen Signalen, die mit stark unterschiedlicher Feldstärke empfangen werden.

Die Demodulation von amplitudenmodulierten Trägersignalen mit stark variabler Feldstärke wird beispielsweise in Rundfunkempfängern durchgeführt. Dort werden die Signale in einem Verstärker mit variabler Verstärkung so verstärkt, daß sie bei verschiedenen Empfangsfeldstärken am Demodulator etwa gleichen Pegel aufweisen. Dieses Prinzip der variablen bzw. geregelten Verstärkung ist jedoch in manchen anderen Fällen nicht anwendbar.

Ein Beispiel hierfür sind kontaktlos les- und schreibbare Datenträger, die mit einer festen Basisstation zusammenarbeiten, wobei diese ein Trägersignal aussendet, mit dem nicht nur Daten insbesondere zur Steuerung des Datenträgers, sondern auch die Energie zum Betreiben der im Datenträger angeordneten Schaltungen übertragen werden. Daher muß bei steigender Empfangsenergie, beispielsweise infolge eines verringerten Abstandes zwischen Datenträger und Basisstation, die von der Antenne abgegebene Spannung auf einen maximalen Wert begrenzt werden. Dann ist es jedoch schwierig, aus dem nur noch begrenzt vorliegenden Antennensignal die in der Amplitudenmodulation enthaltene Information durch Demodulation zu gewinnen. Außerdem sind amplitudenmodulierte Trägersignale sehr störanfällig.

Aufgabe der Erfindung ist es, ein Verfahren zum Demodulieren eines digital amplitudenmodulierten Trägersignals anzugeben, womit eine zuverlässige Demodulation zuverlässig und störsicher möglich ist, und zwar auch bei besonderen Randbedingungen wie beispielsweise bei stark schwankenden und von Störungen überlagerten Trägersignalen.

Zur Lösung dieser Aufgabe umfaßt das erfindungsgemäße Verfahren zum Demodulieren eines digital amplitudenmodulierten Trägersignals die folgenden Schritte:
- Bilden von ersten Differenzwerten aus Differenzen des einen Vorzeichens zwischen einem ersten Regelsignal und Hilfssignalen, die von jeder n-ten Halbwelle des Trägersignals abgeleitet sind,
- kontinuierliches Integrieren der ersten Differenzwerte zu einem ersten Integral,
- periodisches Verringern des ersten Integrals um einen festen Bruchteil,
- Steuerung des ersten und wenigstens eines dazu proportionalen zweiten Regelsignals nichtlinear abhängig vom Wert des ersten Integrals,
- Bilden von zweiten Differenzwerten aus Differenzen des einen Vorzeichens zwischen jedem zweiten Regelsignal und den Hilfssignalen,
- Integrieren jedes zweiten Differenzwertes getrennt zu wenigstens einer Folge von zweiten Integralen,
- Erzeugung wenigstens eines demodulierten Signals aus einer Folge von zweiten Integralen.

Durch die Bildung des Integrals jedes zweiten Differenzwertes, der vom Eingangssignal abgeleitet ist, werden kleinere Störungen, die diesem Eingangssignal überlagert sind, wesentlich weitergehend ausgeglichen, als dies beispielsweise bei einer üblichen Spitzenwert-Demodulation der Fall ist. Das Eingangssignal ist dabei von jeder n-ten Halbwelle des Trägersignals abgeleitet, vorzugsweise von jeder zweiten Halbwelle und damit von jeder Halbwelle gleicher Polarität des Trägersignals. Da das demodulierte Signal aus den integrierten zweiten Differenzwerten erzeugt wird, ist dafür die Unterdrückung von Störungen ebenfalls wirksam. Bei der Erzeugung der Regelsignale ist die Unterdrückung von Störungen durch Integration noch wesentlich wirksamer, weil dabei ein Integral über eine Vielzahl von Halbwellen des Trägersignals gebildet wird. Die nichtlineare Erzeugung der Regelsignale aus dem Wert des ersten Integrals erfolgt im Idealfall über einen Schwellwertvergleich, jedoch ist es in praktischen Fällen ausreichend, ein Element mit einem Schwellwert und einer gekrümmten Eingangskennlinie zu verwenden, beispielsweise einen Feldeffekt-Transistor. Dabei sind dann die Regelsignale nicht vollständig, aber doch weitgehend unabhängig von der Stärke des Eingangssignals. Das erste Regelsignal stellt sich stets derart ein, daß der Beitrag, den jeder erste Differenzwert zum ersten Integral liefert, gleich dem festen Bruchteil ist, um den das erste Integral verringert wird. Insbesondere bei einem starken Trägersignal ist das Regelsignal dann auch sehr groß, so daß eine relativ kleine Differenz zwischen zwei großen Werten gebildet wird und die Demodulation damit sehr empfindlich wird. Dies ist besonders vorteilhaft bei digital amplitudenmodulierten Trägersignalen.

Bei dem einfachsten Fall einer binären Amplitudenmodulation, bei dem das Trägersignal also einen von nur zwei Werten annehmen kann, wird das zweite Regelsignal etwa so gewählt, daß es zwischen diesen beiden Werten liegt. Dieses Prinzip der Erfindung läßt sich jedoch auch auf ein digital amplitudenmoduliertes Trägersignal erweitern, bei dem das Trägersignal zwischen mehreren Werten, z.B. zwischen drei oder vier verschiedenen Werten, umgeschaltet wird. Dabei können dann mehrere zweite Regelsignale mit unterschiedlichen Werten verwendet werden, die zwischen den einzelnen relativen Werten des Trägersignals liegen.

Der Beitrag, den jedes erste Hilfssignal zum ersten Integral liefert, wird u.a. auch durch Störsignale beeinflußt, die dem Trägersignal überlagert sind. Um diesen Einfluß zu verringern, ist es nach einer weiteren Ausgestaltung der Erfindung zweckmäßig, daß jeder erste Differenzwert getrennt zu einem dritten Integral integriert wird und das dritte Integral nach jedem Hilfssignal mit dem ersten Integral kombiniert wird. Jedes dritte Integral kann dabei leicht auf einen maximalen Wert begrenzt werden, so daß im Falle einer Störung auf dem Trägersignal das erste Integral nur wenig verfälscht wird.

Das Bilden des dritten Integrals und dessen Kombination mit dem ersten Integral sollte in verschiedenen Zeitabschnitten erfolgen, um eine gegenseitige Beeinflussung zu vermeiden. Hierfür ist eine Ausgestaltung des erfindungsgemäßen Verfahrens dadurch gekennzeichnet, daß das Bilden des dritten Integrals und das Kombinieren mit dem ersten Integral in verschiedenen Zeitabschnitten durch ein Taktsignal gesteuert wird, das von dem Trägersignal abgeleitet wird. Auf diese Weise wird am einfachsten erreicht, daß die Bildung des dritten Integrals, die vom Trägersignal bestimmt wird, zeitversetzt synchron mit dem Kombinieren der beiden Integrale erfolgt.

Der Erfindung liegt weiterhin die Aufgabe zugrunde, eine Schaltungsanordnung zum Demodulieren eines digital amplitudenmodulierten Trägersignals anzugeben, die eine zuverlässige Demodulation auch bei schwierige Randbedingungen zuverlässig und störungsarm ermöglicht.

Zur Lösung dieser Aufgabe ist die erfindungsgemäße Schaltungsanordnung zum Demodulieren eines digital amplitudenmodulierten Trägersignals versehen mit
- einer Eingangsschaltung zum Erzeugen wenigstens eines elektrischen Eingangssignals aus jeder n-ten Halbwelle des Trägersignals,
- einer ersten Subtrahierstufe zum Subtrahieren eines ersten Regelsignals von den Eingangssignalen und zum Abgeben von ersten Differenzsignalen des einen Vorzeichens,
- einem ersten Integrator zum kontinuierlichen Integrieren der ersten Differenzsignale und zum Bilden eines ersten Integralsignals,
- Entlademitteln zum periodischen Verringern des ersten Integralsignals um einen festen Bruchteil,
- ersten Steuermitteln zum Erzeugen des ersten und wenigstens eines zweiten Regelsignals aus dem ersten Integralsignal über einen nichtlinearen Zusammenhang,
- einer zweiten Subtrahierstufe zum Subtrahieren des zweiten Regelsignals von den Eingangssignalen und zum Abgeben von zweiten Differenzsiganlen des einen Vorzeichens,
- wenigstens einem zweiten Integrator zum getrennten Integrieren jedes Zweiten Differenzsignals und zum Bilden von zweiten Integralsignalen,
- zweiten Steuermitteln zum Ableiten wenigstens eines demodulierten Signals aus den zweiten Integralsignalen.

Die erste Subtrahierstufe bildet die Differenz zwischen dem ersten Regelsignal und dem Eingangssignal, die zu einem ersten Integralsignal kontinuierlich integriert wird, aus dem das Regelsignal nichtlinear gebildet wird. Dadurch entsteht ein Regelkreis, der einerseits unempfindlich gegenüber Störungen und andererseits empfindlich gegenüber der Amplitudenmodulation des Trägersignals ist. Das zweite Regelsignal wird zur Demodulation eines binären Signals kleiner eingestellt als das erste Regelsignal, nämlich zwischen diesem und dem niedrigeren Pegel des modulierten Trägersignals. Falls ein digital amplitudenmoduliertes Trägersignal mit mehreren Pegel demoduliert werden soll, werden entsprechend mehrere zweite Regelsignale verwendet. Dafür ist dann auch eine entsprechende Anzahl zweiter Subtrahierer und Integratoren erforderlich. Statt der Erzeugung unterschiedlicher zweiter Regelsignale ist es jedoch auch möglich, von dem Trägersignal unterschiedliche Eingangssignale mit entsprechender Amplitude abzuleiten und jeweils das gleiche zweite Regelsignal zu verwenden.

Die Erzeugung von Differenzsignalen des einen Vorzeichens, beispielsweise die Erzeugung von nur positiven Differenzsignalen, wird entweder dadurch realisiert, daß Differenzsignale des anderen Vorzeichens unterdrückt werden oder daß die Subtrahierstufen derart aufgebaut werden, daß nur die Differenzsignale des einen Vorzeichens erzeugt und abgegeben werden.

Ausführungen der erfindungsgemäßen Schaltungsanordnung, insbesondere die Realisierung der Subtrahierstufen, Integratoren und weiteren Elemente, können auf einfache Weise mit Kondensatoren und Feldeffekt-Transistoren erfolgen, wie in den weiteren Unteransprüchen angegeben ist. Dabei wird das Eingangssignal in solchen Fällen, wo das Trägersignal auf einen festen maximalen Wert durch eine Schaltung mit einer gesteuerten Last begrenzt wird, wie dies bei kontaktlosen Datenträgern der Fall ist, von dem Steuersignal dieser Last abgeleitet und somit durch einen Strom dargestellt. Besonders vorteilhaft bei dieser Realisierung ist es, daß alle dynamischen Eigenschaften der Schaltung wie Verhältnisse von Integralen oder Zeitkonstanten nur von Kapazitätswerten von Kondensatoren bzw. von Eigenschaften von Transistoren abhängen, die leicht und zuverlässig eingestellt werden können.

Ausführungsbeispiele der Erfindung werden nachstehend anhand der Zeichnung näher erläutert. Es zeigen:
Fig 1 ein Blockschaltbild einer erfindungsgemäßen Schaltungsanordnung,
Fig. 2 ein Zeitdiagramm von verschiedenen Signalen in dem Blockschaltbild nach Fig. 1,
Fig. 3 die Realisierung der Blöcke in dem Blockschaltbild nach Fig. 1 mittels Kondensatoren und Feldeffekt-Transistoren.

Die nachfolgend beschriebenen Beispiele beziehen sich für eine einfachere Erklärung auf die Demodulation eines binär amplitudenmodulierten Trägersignals.

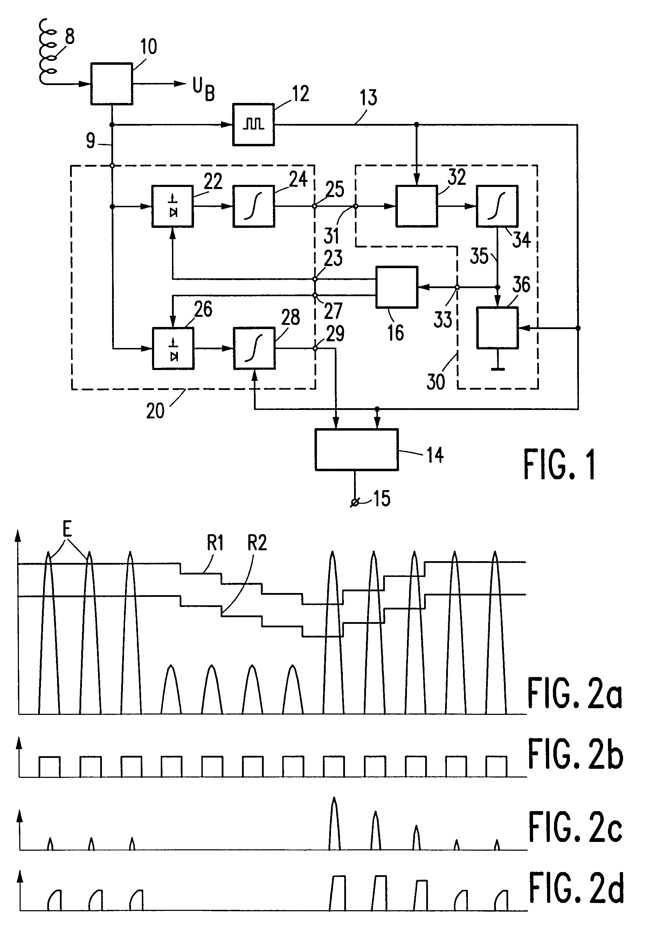

In Fig. 1 wird von einer als Spule bzw. Schwingkreis ausgebildeten Antenne 8 ein Trägersignal aufgenommen und einer Anordnung 10 zugeführt, in der von der Spannung der Antenne die Betriebsspannung U_{B} mit einem etwa konstanten Wert gebildet wird. Dazu wird aus praktischen Gründen die Spannung der Antenne durch eine Begrenzerschaltung begrenzt, die im wesentlichen eine gesteuerte Last als teilweisen Kurzschluß der Antennenspannung enthält. Von der Begrenzerschaltung wird das aus einem Strom gewonnene Steuersignal auf einer Leitung 9 als Eingangssignal für weitere Elemente in dem Blockschaltbild abgegeben.

Dieses Eingangssignal wird einer ersten Einheit 20 zugeführt, die zwei Subtrahierer 22 und 26 sowie zwei Integratoren 24 und 28 enthält. In dem Subtrahierer 22 wird von dem Eingangssignal ein erstes Regelsignal subtrahiert, das von einer Regelschaltung 16 über einen Eingang 23 zugeführt wird, und die Differenz der beiden Signale wird in dem Integrator 24 integriert, sofern diese Differenz in diesem Beispiel positiv ist, während negative Differenzen unterdrückt werden. Das im Integrator 24 erzeugte Signal wird als ein Integralsignal an einem Ausgang 25 der Einheit 20 abgegeben.

Der Ausgang 25 ist mit einem Eingang 31 einer zweiten Einheit 30 verbunden. Darin ist eine Kombinieranordnung 32 und ein weiterer Integrator 34 enthalten. Die Kombinieranordnung 32 wird von einem Taktsignal auf der Leitung 13 gesteuert, das von einem Taktgenerator 12 erzeugt wird, der hierfür mit der Leitung 9 für das Eingangssignal verbunden ist. Bei jeder Ansteuerung der Kombinieranordnung 32 führt diese dem Integrator 34 einen Wert zu, der von dem Integralsignal am Eingang 31 abhängt.

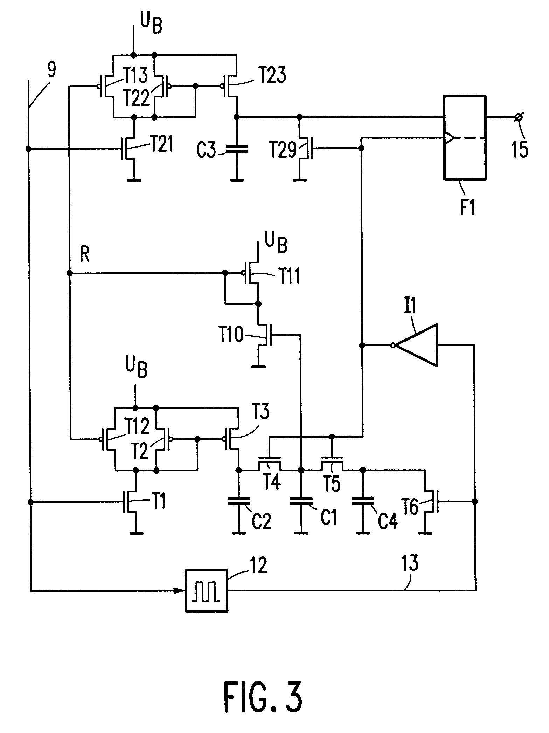

Dies kann auf verschiedene Weise erfolgen, abhängig davon, wie das Integralsignal am Ausgang 25 dargestellt wird und wie der Integrator 34 aufgebaut ist. Eine besonders einfache Realisierung der Kombinieranordnung 32 wird später anhand der Fig. 3 erläutert.

Das im Integrator 34 gebildete Integralsignal wird über die Leitung 35 einer Entladeanordnung 36 zugeführt, die ebenfalls von dem Taktsignal auf der Leitung 13 gesteuert wird und dabei jedesmal einen Bruchteil des zweiten Integralsignals von diesem subtrahiert.

Die Leitung 35 ist außerdem mit einem Ausgang 33 der zweiten Einheit 30 verbunden, der auf eine Regelschaltung 16 führt. Diese erzeugt das erste Regelsignal, das in der ersten Einheit 20 über den Eingang 23 dem Subtrahierer 22 zugeführt wird. Zur Erzeugung des Regelsignals nichtlinear abhängig vom Signal am Ausgang 33 wird in der Regelschaltung 16 dieses Signal im wesentlichen mit einem Schwellwert verglichen, so daß ein höheres Signal am Ausgang 33 ein wesentlich größeres Regelsignal erzeugt. Damit wird die vom Subtrahierer 22 erzeugte Differenz kleiner und damit auch das vom Integrator 24 am Ausgang 25 gelieferte Signal, wodurch dem zweiten Integrierer 34 beim Kombinieren mit dem ersten Integralsignal ein kleineres Signal zugeführt wird, als durch die Ableitanordnung 36 abgeleitet wird. Wenn die Regelschleife aus der Regelschaltung 16, der ersten Integriereinheit 20 und der zweiten Integriereinheit 30 eingeschwungen ist, hat das Regelsignal einen solchen Wert, daß vom ersten Integrator 24 gerade ein so großes Signal dem zweiten Integrator 34 zugeführt wird, wie über die Ableitanordnung 36 abgeleitet wird. Dies gilt zumindest im unmodulierten Fall oder im Falle bzw. bei binärer Amplitudenmodulation im wesentlichen für den Zeitabschnitt mit dem höheren Eingangssignal.

In Fig. 2 ist ein Beispiel für den zeitlichen Verlauf des Eingangssignals E, von dem ein Teil moduliert ist, und des Regelsignals R1 dargestellt. Dabei sind von dem Eingangssignal E nur die positiven Halbwellen dargestellt, da die negativen Halbwellen nicht oder mit einer weiteren, gleich aufgebauten Schaltung ausgewertet werden.

Zunächst sind drei Halbwellen des Trägersignals mit voller Amplitude dargestellt, wobei das Regelsignal R1 den stationären Zustand erreicht hat, bei dem es nur wenig unterhalb der Spitzen des Eingangssignals E verläuft. Die Zeile b) deutet ein Taktsignal an, das aus dem Trägersignal gewonnen ist. In Zeile c) sind die Differenzwerte dargestellt, die von dem Subtrahierer 22 erzeugt werden. Es entstehen also nur positive Differenzwerte, negative Differenzwerte werden nicht gebildet bzw. nicht ausgewertet. In Zeile d) sind die aus den Differenzwerten der Zeile c) gebildeten Integrale dargestellt, die zunächst als das Signal am Ausgang 25 betrachtet werden können.

In Zeile a) der Fig. 2 sind die vierte bis siebte Halbwelle durch Modulation auf ca. 30% des Maximalwertes abgesenkt und liegen damit unterhalb des Regelsignals R1. Wie in Zeile c) dargestellt ist, treten nun keine positiven Differenzwerte mehr auf, und das Regelsignal R1 wird nun mit jeder Rückflanke des in Zeile b) dargestellten Taktsignals verringert, entsprechend der Verringerung des Integrals im Integrator 34.

Mit der ersten Halbwelle, die danach wieder mit voller Amplitude auftritt, entstehen wieder Differenzsignale, und zwar nun mit einem hohen Wert, wie in Zeile c) dargestellt ist. Diese vom Subtrahierer 22 gelieferten Differenzsignale bilden nun hohe Integrale im Integrator 24, jedoch nicht proportional der Amplitude des Differenzsignals, da angenommen wird, daß der Integrator 24 einen Sättigungswert aufweist. Dies ist auch eine gute Maßnahme gegen Störsignale, die den Trägersignalen überlagert sein können. Mit diesen Integralen wird das Integral im Integrator 34 wieder erhöht, wodurch das Regelsignal R1 wieder ansteigt. Gleichzeitig werden damit die folgenden Differenzsignale und damit die daraus gebildeten Integrale zunehmend kleiner, bis sich wieder der eingeschwungene Zustand eingestellt hat.

Wenn im modulierten Fall das Eingangssignal abnimmt, wird die vom Subtrahierer 22 erzeugte positive Differenz verhältnismäßig stärker kleiner bzw. gleich Null, wie in Fig. 2 in Zeile c) dargesellt ist, und damit auch das vom Integrator 24 erzeugte Signal am Ausgang 25. Das demodulierte Signal könnte also von diesem Ausgang 25 abgenommen werden. Dabei muß dann allerdings vorausgesetzt werden, daß das Signal am Ausgang 25 nur von der Integration bei der jeweils letzten Halbwelle des Eingangssignals abhängt und vor der nächsten Integration wieder auf Null gesetzt wird. Wenn jedoch die Kombinieranordnung 32 eine Rückwirkung auf den Ausgang 25 und damit auf den Integrator 24 hat, wie dies bei der später zu beschreibenden Ausführung der Kombinieranordnung 32 der Fall ist, kann das Signal am Ausgang 25 nicht ohne weiteres verwendet werden.

In der Fig. 1 enthält daher die erste Einheit 20 einen zweiten Subtrahierer 26 und einen weiteren, daran angeschlossenen Integrator 28. Der Subtrahierer 26 empfängt auch das Eingangssignal und außerdem über einen Eingang 27 ein weiteres Regelsignal R2 von der Regelschaltung 16, das in Fig. 2 in Zeile a) ebenfalls als proportional etwas kleiner als R1 dargesellt ist. Grundsätzlich können die beiden, den Eingängen 23 und 27 zugeführten Regelsignale gleich sein, was jedoch eine Frage der schaltungsmäßigen Realisierung ist. Bei dem Beispiel in Fig. 1 erhält der Subtrahierer 26 also ein gesondertes Regelsignal, wodurch das vom weiteren Integrator 28 integrierte Differenzsignal am Ausgang 29 ein Ausgangssignal mit einem Pegel erzeugt, der von dem des Signals am Ausgang 25 unabhängig ist. Insbesondere wird das Signal des Integrators 28 nach jeder Integration einer Halbwelle durch das Taktsignal auf der Leitung 13 wieder auf einen Anfangswert bzw. Nullwert zurückgesetzt.

Da als demoduliertes Signal selbstverständlich ein stetiges Signal gewünscht wird, ist für die Demodulation eines binärmodulierten Trägersignals der Ausgang 29 mit einer Auswerteanordnung 14 verbunden, die vorzugsweise ein binäres Speicherglied enthält. Dieses übernimmt mit jedem Taktsignal auf der Leitung 13 den Signalzustand am Ausgang 29 und gibt somit am Ausgang 15 ein stetiges binäres Signal ab.

Das in Fig. 3 dargestellte detailliertere Schaltbild enthält die Realisierungen von verschiedenen Blöcken aus dem Blockschaltbild in Fig. 1. Außerdem sind noch weitere Elemente vorhanden, die nachfolgend erläutert werden. Die Schaltung in Fig. 3 ist mit selbstsperrenden Feldeffekt-Transistoren aufgebaut, wobei ein kleiner Kreis vor dem Gate eines Transistors angibt, daß es sich um einen p-leitenden Feldeffekt-Transistor handelt, während die übrigen Transistoren n-leitende Feldeffekt-Transistoren sind.

Das Eingangssignal auf der Leitung 9, das also dem Strom in der Begrenzerschaltung für die Antennenspannung entspricht, wird einem Transistor T1 zugeführt, der dieses Signal wieder in einen Strom umwandelt. Dieser Signalstrom wird der Drain von zwei parallelgeschalteten Transistoren T2 und T12 zugeführt, deren Source mit der Betriebsspannung U_{B} verbunden ist. Dem Gate des Transistors T12 wird ein Steuersignal von einem Schaltungsknoten R zugeführt, während das Gate des Transistors T2 mit seiner Drain und mit dem Gate eines Transistors T3 verbunden ist, so daß die Transistoren T2 und T3 einen Stromspiegel bilden. Der Transistor T3 liefert also einen Strom, der gleich der Differenz des Stroms, den der Transistor T1 aus dem Eingangssignal erzeugt, und einem Regelstrom von dem Transistor T12 ist. Dieser Differenzstrom lädt einen Kondensator C2 auf. Die Transistoren T2, T3 und T12 bilden also den Subtrahierer 22 in Fig. 1, während der Kondensator C2 den ersten Integrator 24 bildet.

Die Verbindung des Kondensators C2 mit dem Transistor T3 ist über einen weiteren Transistor T4 mit dem einen Anschluß eines Kondensators C1 mit wesentlich größerer Kapazität als der Kondensator C2 verbunden, und dieser Anschluß ist ferner über einen weiteren Transistor T5 mit einem Anschluß eines Kondensators C4 verbunden, der eine wesentlich kleinere Kapazität als der Kondensator C1 aufweist. Die beiden Transistoren T4 und T5 werden über einen Inverter I1 von den Taktsignalen auf der Taktleitung 13 gesteuert, die von einem Taktgenerator 12 geliefert werden, der mit der Leitung 9 für das Eingangssignal verbunden ist, wie bereits anhand der Fig. 1 erläutert wurde. Parallel zum Kondensator C4 ist ein weiterer Transistor T6 geschaltet, der direkt von den Taktsignalen auf der Leitung 13 gesteuert wird.

Es ist zu erkennen, daß der Transistor T4 der Kombinieranordnung 32 in Fig. 1 entspricht, der Kondensator C1 dem ersten Integrierer 34 und der Kondensator C4 mit dem Transistor T6 der Entladeanordnung 36.

Wenn eine positive Halbwelle auf der Leitung 9 erscheint, erzeugt der Transistor T1 einen Signalstrom, der über den Stromspiegel mit den Transistoren T2 und T3 den Kondensator C2 entsprechend dem Eingangssignal auflädt. Gleichzeitig wird der Kondensator C4 über den Transistor T6 entladen. Nach dem Ende dieser Halbwelle sind die Transistoren T1 und T6 gesperrt, und die Transistoren T4 und T5 werden über den Inverter I1 leitend geschaltet und verbinden alle drei Kondensatoren C1, C2 und C4 miteinander, so daß alle auf die gleiche Spannung aufgeladen werden, jedoch entsprechend ihrer unterschiedlichen Kapazität unterschiedliche Ladungen enthalten. Um die Spannung konstant zu halten, muß vom Kondensator C2 gerade so viel Ladung dem Kondensator C1 zugeführt werden, wie durch den vorher entladenen Kondensator C4 abgeleitet wird.

Die Spannung am Kondensator C1 wird dem Gate eines Transistors T10 zugeführt, dessen Drain mit der Drain und dem Gate eines Transistors T11 verbunden ist. Dieser Transistor T11 wirkt daher zusammen mit den Transistoren T12 und T13 über den Schaltungsknoten R als Stromspiegel mit zwei Stromausgängen. Wenn die Spannung am Kondensator C1 so groß ist, daß der Transistor T10 leitet und einen Strom liefert, erscheint dieser Strom abhängig von den geometrischen Verhältnissen der Transistoren T11, T12 und T13 auch an den Ausgängen der letzteren beiden Transistoren. Der vom Transistor T12 erzeugte Strom wird von dem Strom des Transistors T1 subtrahiert, wie bereits erläutert wurde. Der Transistor 10 stelt hier das nichtlineare Element für die Umwandlung der Spannung am Kondensator C1 in dem Regelstrom dar.

Der vom Transistor T13 erzeugte Strom wird von dem Strom eines Transistors T21 subtrahiert, der über die Leitung mit dem Eingangssignal angesteuert wird, und die Differenz wird einem Transistor T22 zugeführt, dessen Drain mit dem eigenen Gate und dem Gate eines Transistors T23 verbunden ist, so daß die Stromdifferenz am Ausgang des Transistors T23 erscheint und einen Kondensator C3 auflädt. Für eine gute Demodulation eines binär modulierten HF-Signals sollte die Spannung am Kondensator C3 bei dem einen Modulationswert möglichst hoch und beim anderen Modulationswert möglichst niedrig sein. Dies geschieht beispielsweise dadurch, daß der Transistor T13 eine etwas kleinere Fläche hat als der Transistor T12 und somit einen kleinen Regelstrom liefert, so daß die Stromdifferenz bei dem Subtrahierer, der durch den Transistor T21 und den Transistor T13 bzw. dem von ihm erzeugten Strom gebildet wird und dem Subtrahierer 26 in Fig. 1 entspricht, größer ist als die Stromdifferenz, die von den Transistoren T1 und T12 erzeugt wird. Stattdessen könnte auch der Transistor T21 mehr Strom liefern als der Transistor T1 beim gleichen Eingangssignal, oder die Kapazität des Kondensators C3 kann kleiner gewählt werden. In jedem Falle sollte erreicht werden, daß der Kondensator C3 beim einen Wert des binär modulierten Trägersignals ganz aufgeladen wird, bis der Transistor T23 in die Sättigung gelangt, während bei dem anderen Modulationswert des Trägersignals die Stromdifferenz negativ wird, d.h. der Transistor T22 und damit auch der Transistor T23 führt überhaupt keinen Strom und der Kondensator C3 wird überhaupt nicht aufgeladen.

Der Kondensator C3 ist mit dem Dateneingang eines D-Flipflops F1 und über einen Transistor T29 mit Bezugspotential verbunden. Nach jedem Aufladen des Kondensators C3, d.h. nach jeder entsprechenden Halbwelle des Eingangssignals auf der Leitung 9 wird durch das Taktsignal auf der Leitung 13 über den Inverter I1 der momentane Signalzustand des Kondensators C3 in das Flipflop F1 übernommen, und gleichzeitig bzw. etwas verzögert wird der Kondensator C3 über den Transistor T29 entladen, so daß für die folgende Aufladung ein eindeutiger Anfangszustand besteht. Wenn mehrere Halbwellen hintereinander derselbe Signalpegel des modulierten Trägersignals und damit des Eingangssignals am Eingang 9 vorhanden ist, liefert das Flipflop F1 ein konstantes Signal am Ausgang 15.

Grundsätzlich könnte der Kondensator C1 mit dem Kondensator C2 zusammengefaßt und der Transistor T4 durch eine direkt Verbindung ersetzt werden, um das Regelsignal bzw. die Regelsignale in der beschriebenen Weise zu erzeugen. Eine solche Ausgestaltung wäre jedoch nicht so störsicher wie die beschriebene Schaltungsanordnung, da eine Störung in dem amplitudenmodulierten Trägersignal, mit der immer gerechnet werden muß, die Spannung am Kondensator C1 schnell erheblich erhöhen würde. In der dargestellten Schaltung wird im Falle einer Störung lediglich der Kondensator C2 voll aufgeladen, bis der Transistor T3 in die Sättigung gelangt. Bei einem entsprechenden Verhältnis zwischen den Kapazitäten der Kondensatoren C1 und C2 ist dann die maximale Spannungsänderung am Kondensator C1 nur gering, so daß die Regelschleife dann nicht gestört wird.

Aus der vorstehenden Beschreibung wird klar, daß die dynamischen Eigenschaften der Schaltung, insbesondere die Zeitkonstante der Regelung, nur durch die Verhältnisse von Kapazitätswerten von Kondensatoren bestimmt wird, die mit guter Genauigkeit hergestellt werden können. Die nichtlineare Charakteristik bei dem Zusammenhang zwischen dem ersten Integral, d.h. der Spannung am Kondensator C1, und dem Regelsignal entsprechend den Strömen der Transistoren T12 und T13, wird durch die Eingangscharakteristik des Transistors T10 gebildet, der ebenfalls mit guter Genauigkeit hergestellt werden kann. Insbesondere werden keine absoluten Referenzwerte für die Demodulation benötigt.

Die vorstehende Beschreibung bezieht sich auf die Demodulation eines binär amplitudenmodulierten Trägersignals. Bei einer digitalen Modulation, beispielsweise einer dreiwertigen oder einer vierwertigen Modulation, bei der der Träger gegenüber dem momentanen Maximalwert auf zwei oder drei verschiedene Werte abgesenkt werden kann, werden entsprechend mehr zweite Subtrahierschaltungen und zweite Integratoren benötigt.

Die vorstehend beschriebene Schaltung nutzt nur die einen Halbwellen des Trägersignals aus. Um die Zuverlässigkeit zu erhöhen, ist es zweckmäßig, auch die anderen, negativen Amplituden des Trägersignals zu verwenden, indem eine weitere, entsprechend aufgebaute Schaltung verwendet wird. Da die Begrenzerschaltung beide Halbwellen des Antennensignals begrenzen muß, sind für beide Halbwellen auch entsprechende Steuersignale vorhanden, wobei das Steuersignal für die entsprechende andere Halbwelle des Trägersignals für die zusätzliche Schaltung verwendet werden kann.

## Patentansprüche

1. Verfahren zum Demodulieren eines digital amplitudenmodulierten Trägersignals mit folgenden Schritten:
- Bilden von ersten Differenzwerten aus Differenzen des einen Vorzeichens zwischen einem ersten Regelsignal und Hilfssignalen, die von jeder n-ten Halbwelle des Trägersignals abgeleitet sind,
- kontinuierliches Integrieren der ersten Differenzwerte zu einem ersten Integral,
- periodisches Verringern des ersten Integrals um einen festen Bruchteil,
- Steuerung des ersten und wenigstens eines dazu proportionalen zweiten Regelsignals nichtlinear abhängig vom Wert des ersten Integrals,
- Bilden von zweiten Differenzwerten aus Differenzen des einen Vorzeichens zwischen jedem zweiten Regelsignal und den Hilfssignalen,
- Integrieren jedes zweiten Differenzwertes getrennt zu wenigstens einer Folge von zweiten Integralen,
- Erzeugung wenigstens eines demodulierten Signals aus einer Folge von zweiten Integralen.

2. Verfahren nach Anspruch 1,
dadurch gekennzeichnet, daß jeder erste Differenzwert getrennt zu einem dritten Integral integriert wird und das dritte Integral nach jedem Hilfssignal mit dem ersten Integral kombiniert wird.

3. Verfahren nach Anspruch 2,
dadurch gekennzeichnet, daß das Bilden des dritten Integrals und das Kombinieren mit dem ersten Integral in verschiedenen Zeitabschnitten durch ein Taktsignal gesteuert wird, das von dem Trägersignal abgeleitet wird.

4. Schaltungsanordnung zum Demodulieren eines digital amplitudenmodulierten Trägersignals mit
- einer Eingangsschaltung (10) zum Erzeugen wenigstens eines elektrischen Eingangssignals aus jeder n-ten Halbwelle des Trägersignals,
- einer ersten Subtrahierstufe (22) zum Subtrahieren eines ersten Regelsignals von den Eingangssignalen und zum Abgeben von ersten Differenzsignalen des einen Vorzeichens,
- einem ersten Integrator (34) zum kontinuierlichen Integrieren der ersten Differenzsignale und zum Bilden eines ersten Integralsignals,
- Entlademitteln (36) zum periodischen Verringern des ersten Integralsignals um einen festen Bruchteil,
- ersten Steuermitteln (16) zum Erzeugen des ersten und wenigstens eines zweiten Regelsignals aus dem ersten Integralsignal über einen nichtlinearen Zusammenhang,
- einer zweiten Subtrahierstufe (26) zum Subtrahieren des zweiten Regelsignals von den Eingangssignalen und zum Abgeben von zweiten Differenzsiganlen des einen Vorzeichens,
- wenigstens einem zweiten Integrator (28) zum getrennten Integrieren jedes zweiten Differenzsignals und zum Bilden von zweiten Integralsignalen,
- zweiten Steuermitteln (14) zum Ableiten wenigstens eines demodulierten Signals aus den zweiten Integralsignalen.

5. Schaltungsanordnung nach Anspruch 4 mit
- einem dritten Integrator (24) zum Integrieren jedes ersten Differenzsignals getrennt zu einem dritten Integralsignal,
- Kombiniermitteln (32) zum Kombinieren jedes dritten Integralsignals mit dem ersten Integralsignal nach jedem ersten Differenzsignal.

6. Schaltungsanordnung nach Anspruch 5,
dadurch gekennzeichnet, daß Taktsteuermittel (12) zum Erzeugen eines periodischen Taktsignals aus dem Trägersignal zur Steuerung wenigstens der Entlademittel (36) und der Kombiniermittel (32) vorgesehen ist.

7. Schaltungsanordnung nach Anspruch 5,
dadurch gekennzeichnet, daß der erste Integrator (34) einen ersten Kondensators (C1) und der dritte Integrator (24) einen zweiten Kondensator (C2) enthält und daß ein Schalter (T4) zum periodischen Verbinden des ersten und des zweiten Kondensators (C1, C2) zum Bilden der Kombination des ersten und des zweiten Integralsignals vorgesehen.

8. Schaltungsanordnung nach Anspruch 7,
dadurch gekennzeichnet, daß der erste Kondensator (C1) über die nichtlineare Eingangskennlinie eines Feldeffekt-Transistors (T10) mit einem Steuereingang eines ersten Stromspiegels (T11, T12, T13) gekoppelt ist zum Erzeugen wenigstens eines ersten Regelstroms an einem ersten Regelstromausgang mit einem Wert nichtlinear abhängig von der Ladung auf dem ersten Kondensator (C1), daß ein erster Stromgenerator (T1) mit einem Steuereingang für das Eingangssignal vorgesehen ist, um an einem Ausgang des ersten Stromgenerators einen Strom mit einem Wert abhängig vom Eingangssignal und mit einer Richtung entgegengesetzt zur Richtung des ersten Regelstroms zu erzeugen, und daß der Ausgang des ersten Stromgenerators (T1) mit dem ersten Regelstromausgang und mit einem Steuereingang eines zweiten Stromspiegels (T2, T3) verbunden ist, dessen Stromausgang mit dem ersten Kondensator (C1) verbunden ist.

9. Schaltungsanordnung nach Anspruch 8,
dadurch gekennzeichnet, daß der erste und der zweite Stromspiegel (T11, T12, T13; T2, T3) aus Feldeffekt-Transistoren des einen Leitfähigkeitstyps und der erste Stromgenerator (T1) aus einem Feldeffekt-Transistor des anderen Leitfähigkeitstyps aufgebaut sind.

10. Schaltungsanordnung nach Anspruch 8,
dadurch gekennzeichnet, daß der erste Stromspiegel (T11, T12, T13) eingerichtet zum Erzeugen eines zweiten Regelstroms an einen zweiten Regelstromausgang, daß der zweite Integrator (28) einen dritten Kondensator (C3) umfaßt und daß der zweite Subtrahierer (26) enthält:
einen zweiten Stromgenerator (T21) mit einem Steuereingang für das Eingangssignal und mit einem Stromausgang zum Liefern eines Signalstroms,
einen dritten Stromspiegel (T22, T23) mit einem Steuereingang, der mit dem Ausgang des zweiten Stromgenerators (T21) und mit dem zweiten Regelstromausgang verbunden ist, und mit einem Ausgang, der mit dem dritten Kondensator (C3) verbunden ist, und daß die zweiten Steuermittel (14, F1) an den dritten Kondensator (C3) angeschlossen sind.
